# EUROPÄISCHE PATENTANMELDUNG

(11) **EP 4 582 242 A1**
(43) Veröffentlichungstag der Anmeldung: **09.07.2025**
(21) Anmeldenummer: 24150406.7
(22) Anmeldetag: 04.01.2024
(51) Int. Cl.: B29C 64/386, B29C 64/393, B29C 64/118, B22F 10/80, B22F 10/85, B22F 10/18, B33Y 50/00, B33Y 50/02, B33Y 10/00, G06F 30/27, G06F 113/10, G06N 20/00

(54) **VERFAHREN ZUM ERZEUGEN VON TRAININGSDATEN FÜR EIN MASCHINELLES LERNMODELL ZUM BETREIBEN EINER DREIDIMENSIONALEN-DRUCKEINRICHTUNG**

(71) Anmelder: Siemens Aktiengesellschaft, 80333 München (DE)
(72) Erfinder: Rothbauer, Stefan, 86156 Augsburg (DE); Salecker, Jürgen, 81827 München (DE)
(74) Vertreter: Siemens Patent Attorneys

(57) **Zusammenfassung**

Die Erfindung betrifft ein Verfahren zum Erzeugen von Trainingsdaten (28) für ein maschinelles Lernmodell (30) zum Betreiben einer Dreidimensionalen-Druckeinrichtung (10) mittels einer elektronischen Recheneinrichtung (18), mit den Schritten: Erfassen eines Produktionsdatensatzes (22) während einer Produktion eines Produkts (44) mittels der Dreidimensionalen-Druckeinrichtung (10) mittels der elektronischen Recheneinrichtung (18); Erzeugen einer Qualitätsanfrage (24) zum Produkt (44) mittels der elektronischen Recheneinrichtung (18); Erfassen einer Qualitätsantwort (26) zum Produkt (44) mittels der elektronischen Recheneinrichtung (18); Labeln des Produktionsdatensatzes (22) auf Basis der Qualitätsantwort (26) mittels der elektronischen Recheneinrichtung (18); und Erzeugen der Trainingsdaten (28) in Abhängigkeit von dem gelabelten Produktionsdatensatz (22) mittels der elektronischen Recheneinrichtung (18). Ferner betrifft die Erfindung ein Verfahren zum Trainieren eines maschinellen Lernmodells (30), ein Verfahren zum Betreiben einer dreidimensionalen-Druckeinrichtung (10), ein Computerprogrammprodukt, ein computerlesbares Speichermedium sowie eine elektronische Recheneinrichtung (18, 20).

## Beschreibung

Die nachfolgende Erfindung betrifft ein Verfahren zum Erzeugen von Trainingsdaten für ein maschinelles Lernmodell zum Betreiben einer Dreidimensionalen-Druckeinrichtung mittels einer elektronischen Recheneinrichtung gemäß dem geltenden Patentanspruch 1. Ferner betrifft die Erfindung ein Verfahren zum Trainieren eines maschinellen Lernmodells mittels der Trainingsdaten, ein Verfahren zum Betreiben einer Dreidimensionalen-Druckeinrichtung, ein Computerprogrammprodukt, ein computerlesbares Speichermedium sowie eine elektronische Recheneinrichtung gemäß den unabhängigen Patentansprüchen.

Druckvorgänge bei Dreidimensionalen-Druckeinrichtungen, welche auch als 3D-Drucker bezeichnet werden, sind zeit- und materialintensiv. Fehler im Druckprozess, die nicht erkannt werden, führen zu unnötigem Materialverbrauch und zu zusätzlichen Auslastungen der Maschine, die damit nicht für weitere Druckvorgänge zur Verfügung steht und auch weiterhin abgenutzt wird. Das reduziert sowohl die Wirtschaftlichkeit als auch die Nachhaltigkeitsbilanz dieses Fertigungsverfahrens.

Insbesondere bei sogenannten semi-professionellen 3D-Druckern gibt es derzeit keine Erkennung, dass ein Filamentstau aufgetreten ist. Dieses Problem tritt unter anderen mit den semi-professionellen Druckern auf, der Drucker druckt dann bis zum manuellen Stopp des Druckprozesses "Luft". Aufgrund dieses langen "Luftdruckens" hat sich Filament oftmals im Extruder gestaut und verklebt, eine Säuberungsaktion dauert mehrere Stunden und hätte vermieden werden können, wenn insbesondere das Problem früher hätte erkannt werden können.

Solche Staus können aus verschiedenen Gründen, beispielsweise aufgrund eines Klemmens der Filamentrolle, der Extruder ist zu schwach eingestellt und schafft es nicht, das Filament zu transportieren, der Extrudermotor ist defekt oder dergleichen auftreten.

Dabei kann es für den Nutzer sehr ärgerlich sein, wenn ein Stau nicht zeitnah erkannt wird, denn meistens ist das zugrundeliegende Problem trivial und kann schnell behoben werden.

Sehr oft liegen die Druckzeiten bei dreidimensionalen Druckern im Bereich von mehreren Stunden, beziehungsweise in einer Fertigungshalle sind davon eventuell eine Großzahl von Druckern im Betrieb. Umso wichtiger ist das rechtzeitige Erkennen solch eines Problems. Die hohen Investitionskosten für die Drucker lohnen für den Betreiber nur, wenn der Drucker nahezu vollständig ausgelastet ist und korrekte Endergebnisse produziert. Unproduktive Zeiten im Druck, insbesondere sogenanntes Luftdrucken beziehungsweise ein Ergebnis ist nicht verwendbar und die dadurch entstehende Wiederholung des Druckprozesses sind somit ein großes Problem für das wirtschaftliche Betreiben von dreidimensionalen Druckern. Auch verlängerte Stillstandszeiten aufgrund der oben genannten Probleme bei spätem Erkennen tragen hierzu bei. Daneben spielen die Materialkosten für das unnötig verbrauchte Material beziehungsweise für die Fehldrucke verwendeten Rohstoffe eine Rolle. Unnötige Materialverwendung trägt auch dazu bei, dass die Nachhaltigkeitsbilanz dieses Fertigungsverfahrens schlechter ist, als sie sein könnte.

Insbesondere, die Bewertung, ob der Druckprozess erfolgreich war oder nicht folgt in der Regel erst nach dem Ende des Druckvorgangs durch den Benutzer oder nachgelagerte Qualitätskontrollen. Zu diesem Zeitpunkt wurde die dreidimensional-Druckeinrichtung jedoch für den gesamten ursprünglich vorgesehenen Druckprozess genutzt, inklusive Material- und Energieverbrauch. Eine frühzeitige Erkennung von Fehlern, die zu einem nicht-ausreichend Ergebnis führen ist somit nicht möglich.

Aufgabe der vorliegenden Erfindung ist es, ein Verfahren zum Erzeugen von Trainingsdaten, ein Verfahren zum Trainieren eines maschinellen Lernmodells, ein Verfahren zum Betreiben einer Dreidimensionalen-Druckeinrichtung, ein Computerprogrammprodukt, ein computerlesbares Speichermedium sowie eine elektronische Recheneinrichtung zu schaffen, mittels welchen verbessert eine Dreidimensionale-Druckeinrichtung betrieben werden kann.

Diese Aufgabe wird durch Verfahren, durch ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein erster Aspekt der Erfindung betrifft ein Verfahren zum Erzeugen von Trainingsdaten für ein maschinelles Lernmodell zum Betreiben einer Dreidimensionalen-Druckeinrichtung mittels einer elektronischen Recheneinrichtung. Es wird ein Produktionsdatensatz während einer Produktion eines Produkts mittels der Dreidimensionalen-Druckeinrichtung mittels der elektronischen Recheneinrichtung erfasst. Es erfolgt das Erzeugen einer Qualitätsanfrage zum Produkt mittels der elektronischen Recheneinrichtung. Es wird eine Qualitätsantwort zum Produkt mittels der elektronischen Recheneinrichtung erfasst. Es erfolgt ein Labeln des Produktionsdatensatzes auf Basis der Qualitätsantwort mittels der elektronischen Recheneinrichtung und ein Erzeugen der Trainingsdaten in Abhängigkeit von dem gelabelten Produktionsdatensatz mittels der elektronischen Recheneinrichtung.

Insbesondere können somit Trainingsdaten für ein maschinelles Lernmodell bereitgestellt werden, wobei mittels des maschinellen Lernmodells beispielsweise später eine Qualitätsprüfung bereits während des Produktionsprozesses durchgeführt werden kann. Die Trainingsdaten werden insbesondere dazu genutzt, dass maschinelle Lernmodell entsprechend anzulernen. Das angelernte maschinelle Lernmodell kann dann wiederum an die elektronische Recheneinrichtung zurück übertragen werden und beispielsweise dann bei weiteren Produktionen für Produkte bereitgestellt werden. Die Qualitätsanfrage beinhaltet dabei insbesondere die Anfrage, ob die Produktion korrekt durchgeführt würde, oder ob beispielsweise die Produktion fehlerhaft war. Mit anderen Worten werden können dann wiederum die entsprechenden Produktionsdaten, insbesondere im Produktionsdatensatz, entsprechend gelabelt werden, ob bei der Produktion Fehler aufgetreten sind oder nicht. Dies kann dazu verwendet werden, während der Produktion Fehler bereits frühzeitig zu erfassen. Somit können die Fehler frühzeitig erkannt werden, und beispielsweise der Druckvorgang unterbrochen werden, wodurch insbesondere Material sowie Energie eingespart werden kann.

Insbesondere werden somit die Produktionsdaten der Dreidimensionalen-Druckeinrichtung erfasst, um Kontext und Ergebnis ergänzt und an beispielsweise eine zentrale elektronische Recheneinrichtung übermittelt. Zu den Produktionsdaten sind auch die Daten von beispielsweise weiteren Einrichtungen an der Dreidimensionalen-Druckeinrichtung hinzuzufügen. Die Ergänzung um das Ergebnis und den Kontext ist dabei insbesondere wichtig für die spätere Verwendung der Daten zum Trainieren des maschinellen Lernmodells, insbesondere des neuronalen Netzes. Die Abfrage des Ergebnisses erfolgt beispielsweise durch einen Benutzer, beispielsweise durch Abfrage mit Hilfe eines Dialogs am Ende des Produktionsprozesses. Die Datenerfassung erfolgt für die gesamt im Feld befindliche Gerätebasis, zum Beispiel mit einer Architektur.

Durch das vorgestellte Verfahren können insbesondere potenzielle Fehler im Endergebnis des Produktionsprozesses datenbasiert prognostiziert werden und frühzeitig geeignet auf diese Erkenntnisse reagiert werden.

Gemäß einer vorteilhaften Ausgestaltungsform werden die Trainingsdaten an eine zentrale elektronische Recheneinrichtung zum Trainieren des maschinellen Lernmodells übertragen. Insbesondere kann somit die elektronische Recheneinrichtung im Wesentlichen der Dreidimensionalen-Druckeinrichtung zugeordnet werden. Die Daten werden dort lokal erfasst und können an die zentrale elektronische Recheneinrichtung übertragen werden. Die zentrale elektronische Recheneinrichtung ist dann wiederum dazu ausgebildet, die Trainingsdaten zu nutzen und das maschinelle Lernmodell entsprechend anzulernen. Somit kann zentral das maschinelle Lernmodell angelernt werden.

Bei den gesammelten Daten kann es sich beispielsweise um Stromverbrauchswerte der Extruder zusammen mit dem zeitlichen Verlauf und der Heizung des 3-D Druck Bodens handeln, oder auch um die Luftfeuchtigkeit (für PVA drucken), Schwingungen und Temperatur des Druckraumes. Diese Daten sind rein beispielhaft anzusehen. Es können selbstverständlich noch weitere Daten erfasst werden. Das heißt, dass hier ein mehrdimensionales Modell, in dem Anomalien mit Hilfe von machine leaning models erkannt werden können, erzeugt werden kann.

Gemäß einer vorteilhaften Ausgestaltungsform kann weiterhin vorgesehen sein, als Produktionsdaten zumindest Schwingungen während des Produktionsprozesses an der Dreidimensionalen-Druckeinrichtung erfasst werden. Insbesondere die Schwingungen an der Dreidimensionalen-Druckeinrichtung können Aufschluss dazu geben, ob eine korrekte Produktion des Produkts durchgeführt wird. Sollten beispielsweise spezifische Schwingungen, welche auf einen Fehler hinweisen, erfasst werden, so kann der Druckvorgang entsprechend abgebrochen werden.

Dabei kann weiterhin vorgesehen sein, dass als Produktionsdaten mechanische Schwingungen eines Druckkopfes der Dreidimensionalen-Druckeinrichtung erfasst werden. Auch der Druckkopf gibt entsprechend Aufschluss auf eine korrekte Produktion. Insbesondere die mechanischen Schwingungen am Druckkopf können dazu genutzt werden, um herauszufinden, ob eine korrekte Produktion zu realisieren ist. Somit kann auf unterschiedliche Daten zurückgegriffen werden, um eine korrekte Produktion realisieren zu können.

Ferner hat es sich als vorteilhaft erwiesen, wenn zusätzlich zum Erzeugen der Trainingsdaten eine Zustandsinformation der Dreidimensionalen-Druckeinrichtung erfasst wird. Insbesondere können somit neben den Daten des eigentlichen Produktionsprozesses auch Zustandsinformationen des Geräts erfasst werden, wie beispielsweise der Energieverbrauch, Umgebungsbedingungen oder dergleichen. Somit können auch diese Daten genutzt werden, um zuverlässig auf eine korrekte Produktion schließen zu können.

Weiterhin vorteilhaft ist, wenn die Qualitätsantwort durch Eingabe von einem Nutzer der Dreidimensionalen-Druckeinrichtung erfasst wird. Beispielsweise kann in Form eines Dialogs an einen Nutzer die Qualitätsanfrage gestellt werden. Der Nutzer kann dann auf Basis dieser Qualitätsanfrage eine Qualitätsantwort geben, welche zumindest umfasst, ob das Produkt in Ordnung ist oder nicht in Ordnung ist. Der Nutzer kann selbstverständlich auch weitere Eingaben durchführen, um das maschinelle Lernmodell entsprechend zu erweitern. Somit kann eine Art Abfrage an den Nutzer erstellt werden, und zuverlässig ein Labeln der Produktionsdaten durchgeführt werden.

Dabei kann weiterhin vorgesehen sein, dass die Qualitätsantwort mittels einer Erfassungseinrichtung der Dreidimensionalen-Druckeinrichtung erfasst wird. Bei der Erfassungseinrichtung kann es sich beispielsweise um eine optische Erfassungseinrichtung, beispielsweise eine Kamera handeln. Ferner kann auch ein Radarsensor, ein Lidarsensor oder ein Laserscanner oder dergleichen genutzt werden. Insbesondere kann somit automatisiert die Qualitätsantwort erfasst werden. Somit kann automatisiert realisiert werden, dass die Trainingsdaten entsprechend erzeugt werden können.

Ein zweiter Aspekt der Erfindung betrifft ein Verfahren zum Trainieren eines maschinellen Lernmodells mittels Trainingsdaten, welche mittels eines Verfahrens nach dem ersten Aspekt erzeugt wurden. Insbesondere kann somit ein angelerntes maschinelles Lernmodell bereitgestellt werden.

Dabei sieht eine vorteilhafte Ausgestaltungsform vor, dass das maschinelle Lernmodell in einer zentralen elektronischen Recheneinrichtung bereitgestellt wird. Somit kann zentral das maschinelle Lernmodell entsprechend angelernt werden. Insbesondere ist somit vorgesehen, dass beispielsweise von einer Vielzahl von elektronischen Recheneinrichtungen entsprechende Trainingsdaten zugestellt werden, und das maschinelle Lernmodell auf Basis der Vielzahl von Trainingsdaten angelernt werden kann.

Hierbei kann ferner vorgesehen sein, dass das angelernte maschinelle Lernmodell an die elektronische Recheneinrichtung zurück übermittelt wird. Somit kann automatisiert ein Update-Prozess des maschinellen Lernmodells realisiert werden. Insbesondere kann somit in festen Zeitabständen ein Update des maschinellen Lernmodells, insbesondere bei den elektronischen Recheneinrichtungen realisiert werden. Somit ist ein verbesserter Betrieb der Dreidimensionalen-Druckeinrichtung ermöglicht.

Ein dritter Aspekt der Erfindung betrifft ein Verfahren zum Betreiben einer Dreidimensionalen-Druckeinrichtung mittels eines angelernten maschinellen Lernmodells nach dem zweiten Aspekt. Dabei kann insbesondere vorgesehen sein, dass auf Basis des maschinellen Lernmodells, insbesondere auf Basis eines neuronalen Netzes, eine Fehleranalyse während des Produktionsprozesses des Produkts durchgeführt werden kann.

Hierzu sieht eine vorteilhafte Ausgestaltungsform vor, dass aktuelle Produktionsdaten der Dreidimensionalen-Druckeinrichtung erfasst werden und mittels des maschinellen Lernmodells analysiert werden, wobei eine Produktion eines Produkts auf Basis der Analyse bewertet wird. Beispielsweise kann bei einer Bewertung des Produkts als nicht-in Ordnung eine Fehlermeldung auf Basis des maschinellen Lernmodells erzeugt werden und beispielsweise einem Nutzer übermittelt werden. Ferner kann auch ein automatisierter Druckabbruch durchgeführt werden. Somit können entsprechende Materialverbräuche sowie Stillstandszeiten innerhalb der Dreidimensionalen-Druckeinrichtung reduziert werden.

Ein vierter Aspekt der Erfindung betrifft ein Computerprogrammprodukt zum Erzeugen von Trainingsdaten nach dem ersten Aspekt der Erfindung oder zum Trainieren eines maschinellen Lernmodells nach dem zweiten Aspekt der Erfindung und/oder zum Betreiben einer Dreidimensionalen-Druckeinrichtung nach dem dritten Aspekt der Erfindung.

Dabei sieht ein fünfter Aspekt der Erfindung ein computerlesbares Speichermedium mit einem Computerprogrammprodukt nach den vorhergehenden Aspekten vor. Es kann dabei vorgesehen sein, dass ein einziges Computerprogrammprodukt genutzt wird, um alle drei Verfahrensaspekte durchzuführen. Alternativ oder ergänzend können auch jeweils unterschiedliche separate Computerprogrammprodukte und somit auch unterschiedliche computerlesbare Speichermedien verwendet werden, um die Verfahren entsprechend durchführen zu können.

Dabei kann weiterhin vorgesehen sein, dass eine elektronische Recheneinrichtung zum Betreiben einer Dreidimensionalen-Druckeinrichtung ausgebildet ist, wobei die elektronische Recheneinrichtung zum Durchführen von zumindest einem der Verfahren zum Erzeugen von Trainingsdaten nach dem ersten Aspekt der Erfindung und/oder zum Trainieren eines maschinellen Lernmodells nach dem zweiten Aspekt der Erfindung und/oder zum Betreiben einer Dreidimensionalen-Druckeinrichtung nach dem dritten Aspekt der Erfindung ausgebildet ist. Insbesondere kann beispielsweise die elektronische Recheneinrichtung zum Durchführen des ersten Aspekts zumindest lokal auf der Dreidimensionalen-Druckeinrichtung bereitgestellt werden. Die elektronische Recheneinrichtung zum Durchführen des Verfahrens nach dem zweiten Aspekt kann dabei bevorzugt als zentrale elektronische Recheneinrichtung ausgebildet sein. Die elektronische Recheneinrichtung zum Durchführen des Verfahrens nach dem dritten Aspekt der Erfindung kann dabei wiederum lokal, insbesondere auf der Dreidimensionalen-Druckeinrichtung selbst, bereitgestellt werden.

Ferner betrifft die Erfindung daher auch zumindest eine Dreidimensionale-Druckeinrichtung zum Durchführen der Verfahren nach den vorhergehenden Aspekten.

Vorteilhafte Ausgestaltungsformen der Verfahren sind wiederum als vorteilhafte Ausgestaltungsformen der Computerprogrammprodukte, der computerlesbaren Speichermedien, der elektronischen Recheneinrichtungen sowie der Dreidimensionalen-Druckeinrichtung anzusehen. Die elektronischen Recheneinrichtungen sowie die Dreidimensionalen-Druckeinrichtung weisen hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- Fig.1: eine schematische Ansicht einer Ausführungsform einer Dreidimensionalen-Druckeinrichtung mit zumindest einer elektronischen Recheneinrichtung;

Fig. 2 ein schematisches Blockschaltbild gemäß einer Ausführungsform der Erfindung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

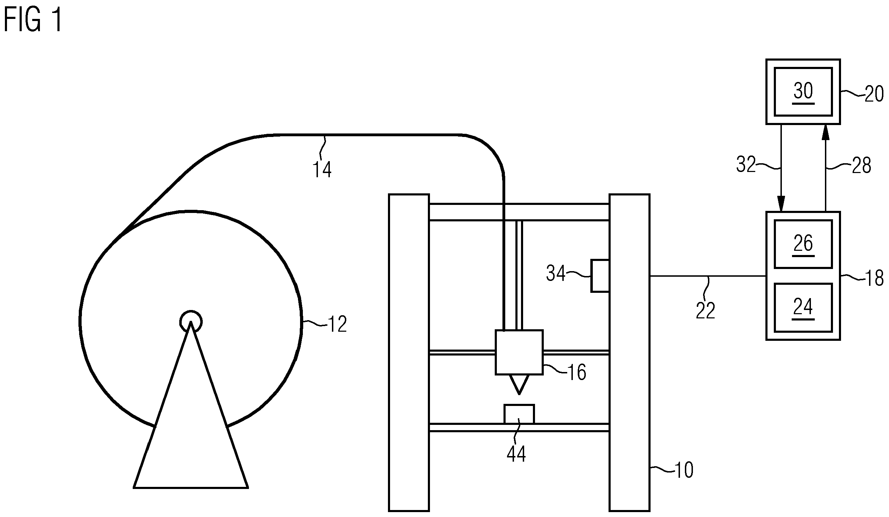

Fig. 1 zeigt eine schematische Ansicht einer Ausführungsform einer Dreidimensionalen-Druckeinrichtung 10. Die Dreidimensionale-Druckeinrichtung 10 weist im folgenden Ausführungsbeispiel insbesondere eine Filamentrolle 12 zum Bereitstellen eines Filaments 14 auf. Ferner ist ein Druckkopf 16 gezeigt.

Die Dreidimensionale-Druckeinrichtung 10 weist ferner zumindest eine elektronische Recheneinrichtung 18 auf, welche mit einer zentralen elektronischen Recheneinrichtung 20 in Verbindung steht. Insbesondere werden, beispielsweise mittels einer Erfassungseinrichtung, ein Produktionsdatensatz 22 während der Produktion eines Produkts 44 von der Dreidimensionalen-Druckeinrichtung 10 erfasst und an die elektronische Recheneinrichtung 18 übermittelt. Es kann dann vorgesehen sein, dass die elektronische Recheneinrichtung 18 eine Qualitätsanfrage 24 erzeugt, welche beispielsweise an einen Nutzer der Dreidimensionalen-Druckeinrichtung 10 gerichtet ist. Ein Nutzer kann dann wiederum eine entsprechende Qualitätsantwort 26 erzeugen. Es erfolgt dann das Labeln der Produktionsdaten beziehungsweise des Produktionsdatensatzes 22 zu entsprechenden Trainingsdaten 28. Die Trainingsdaten 28 werden dann wiederum insbesondere der zentralen elektronischen Recheneinrichtung 20 zur Verfügung gestellt. Auf Basis der Trainingsdaten 28 kann ein maschinelles Lernmodell 30 angelernt werden, wobei das angelernte maschinelle Lernmodell 32 ein angelerntes maschinelles Lernmodell 32 wiederum von der zentralen elektronischen Recheneinrichtung 20 an die elektronische Recheneinrichtung 18 übermittelt werden kann.

Insbesondere zeigt somit die Fig. 1 ein Verfahren zum Erzeugen der Trainingsdaten 28 für das maschinelle Lernmodell 30. Es wird der Produktionsdatensatz 22 während einer Produktion des Produkts 44 mittels der Dreidimensionalen-Druckeinrichtung 10 beziehungsweise mittels der elektronischen Recheneinrichtung 18 erfasst. Es erfolgt das Erzeugen der Qualitätsanfrage 24 zum Produkt 44 mittels der elektronischen Recheneinrichtung 18 und das Erfassen einer Qualitätsantwort 26 zum Produkt 44 mittels der elektronischen Recheneinrichtung 18. Es wird der Produktionsdatensatz 22 auf Basis der Qualitätsantwort 26 mittels der elektronischen Recheneinrichtung 18 gelabelt und es werden die Trainingsdaten 28 in Abhängigkeit von den gelabelten Produktionsdatensatzes 22 erzeugt.

Dabei kann insbesondere vorgesehen sein, dass die Trainingsdaten 28 an die zentral elektronische Recheneinrichtung 20 zum Trainieren des maschinellen Lernmodells 30 übertragen werden.

Ferner können insbesondere als Produktionsdaten zumindest Schwingungen während des Produktionsprozesses der Produktion an der Dreidimensionalen-Druckeinrichtung 10 erfasst. Ferner können als Produktionsdaten mechanische Schwingungen des Druckkopfes 16 der Dreidimensionalen-Druckeinrichtung 10 erfasst werden.

Zusätzlich kann vorgesehen sein, dass zum Erzeugen der Trainingsdaten 28 eine Zustandsinformation der Dreidimensionalen-Druckeinrichtung 10 erfasst wird. Die Qualitätsantwort 26 kann durch Eingabe von einem Nutzer der Dreidimensionalen-Druckeinrichtung 10 erfasst werden oder alternativ oder ergänzend kann die Qualitätsantwort 26 automatisiert, beispielsweise mittels einer optischen Erfassungseinrichtung, beispielsweise in Form einer Kamera 34, erfasst werden. Insbesondere zeigt somit die Fig. 1 einen ersten Schritt einer insgesamt zweistufigen Lösung, bei welchem die Produktionsdaten beziehungsweise der Produktionsdatensatz 22 und beispielsweise Schwingungsdaten des Druckers erfasst werden, um Kontext und Ergebnis ergänzt und an eine zentrale Stelle, insbesondere die zentrale elektronische Recheneinrichtung 20, übermittelt werden. Zu den Produktionsdaten sind auch die Daten der mechanischen Bewegung des Druckkopfes 16 hinzuzufügen, da diese Bewegungen einen deutlichen Einfluss auf das Druckergebnis haben.

Wie bereits erwähnt wird daher vorgeschlagen, dass einmal die Produktionsdaten zusammen mit den Schwingungsdaten der Dreidimensionalen-Druckeinrichtung 10 herausgezogen werden, die dann am Ende des Druckvorgangs "gelabelt" werden, das heißt ein Nutzer kann am Ende des Druckvorgangs das Produkt 44 entsprechend beurteilen.

Die Ergänzung um Ergebnis und Kontext ist dabei wichtig für die spätere Verwendung der Daten zum Trainieren des maschinellen Lernmodells 30, welches insbesondere als neuronalen Netzwerk bereitgestellt wird. Die Erfassung des Ergebnisses erfolgt beispielsweise durch den Nutzer, beispielsweise durch die Abfrage mit Hilfe eines Dialogs am Ende des Produktionsprozesses.

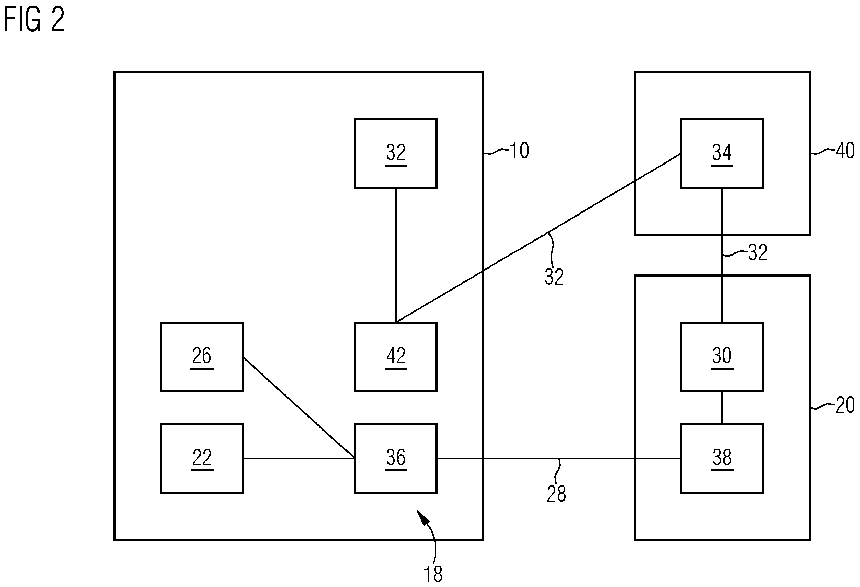

Fig. 2 ein schematisches Blockschaltbild gemäß einer Ausführungsform der Dreidimensionalen-Druckeinrichtung 10 sowie der zentralen elektronischen Recheneinrichtung 20.

Im folgenden Ausführungsbeispiel ist insbesondere gezeigt, dass beispielsweise bei der Qualitätsantwort 26 eine Datenergänzung auf Basis des Ergebnisses, des Labels und des Kontexts durchgeführt wird. Der Produktionsdatensatz 22 übernimmt dabei insbesondere eine Rohdatenerfassung des Produktionsprozesses. Es kann dann zusätzlich eine Datenaufbereitung und Übermittlung 36 vorgesehen sein. Die Trainingsdaten 28 werden dann insbesondere an einen zentralen Datenspeicher 38 der zentralen elektronischen Recheneinrichtung 20 übermittelt. Es erfolgt im Anschluss daran das Training des maschinellen Lernmodells 30 inklusive der Optimierung und dem sogenannten Deployment. Auf Seiten der zentralen elektronischen Recheneinrichtung 20 kann ferner ein sogenannter Update-Server 40 vorgesehen sein, welcher dann wiederum das maschinelle Lernmodell 30 als Artefakt mit Fehlerüberwachung erhält, was wiederum dem angelernten maschinellen Lernmodell 32 entspricht. Auch auf Seiten der Dreidimensionalen-Druckeinrichtung 10 kann ein entsprechender Update-Client 42 vorgesehen sein, welches wiederum das auf Seiten der Dreidimensionalen-Druckeinrichtung 10 abgespeicherte angelernte maschinelle Lernmodell 32 regelmäßig updatet.

Insbesondere zeigt somit die Fig. 2 ein Verfahren zum Trainieren des maschinellen Lernmodells 30 mittels der Trainingsdaten 28. Dabei wird das maschinelle Lernmodell 30 insbesondere in der zentralen elektronischen Recheneinrichtung 20 bereitgestellt. Ferner ist es gezeigt, dass das angelernte maschinelle Lernmodell 32 dann wiederum an die elektronische Recheneinrichtung 18 zurückgesendet werden kann.

Insbesondere wird somit das maschinelle Lernmodell 30 entsprechend trainiert wird. Ziel des Trainings ist, möglichst früh zu erkennen, wenn ein Produktionsprozess ein nicht-ausreichendes Ergebnis liefern wird. Das angelernte maschinelle Lernmodell 32 wird dann als Artefakt, optimiert für das Zielgerät, insbesondere die Dreidimensionale-Druckeinrichtung 10, bereitgestellt und über einen Updatemechanismus auf der Dreidimensionalen-Druckeinrichtung 10 installiert. Das Fehlüberwachungsmodell läuft nun im Betrieb mit und bewertet die anfallenden Prozessdaten hinsichtlich möglicher Probleme für das Endergebnis. Kann das maschinelle Lernmodell 30 erkennen, dass ein Problem wahrscheinlich auftreten wird, kann es entweder direkt eingreifen, beispielsweise den Prozess abbrechen, oder eine Warnung an den Nutzer ausgeben, sodass dieser die Entscheidung zum Fortführen oder Abbrechen der laufenden Produktion zeitnah treffen kann. Die Entscheidung und auch die Art der Reaktion kann auch durch das maschinelle Lernmodell 30 erfolgen insbesondere auf Basis der Sicherheit/Unsicherheit, mit der das maschinelle Lernmodell 30 das Ergebnis des Produktionsprozesses, insbesondere Erfolg oder Fehler, bewertet. Auch einbezogen werden können anwendungsspezifische Kriterien, wie die genauen Kosten für das verwendete Material, insbesondere im Fehlerfall wird durch Weiterdrucken zusätzlich Material verwendet, und die zusätzliche Zeit, in der der Drucker potenziell einen anderen gewinnbringenden Auftrag bearbeiten könnte.

Neben den Daten des Produktionsprozesses können auch Zustandsinformationen der Dreidimensionalen-Druckeinrichtung 10 erfasst werden, wie beispielsweise Energieverbrauch, Umgebungsbedingungen, oder dergleichen.

Anwendungsabhängig und abhängig von der Dreidimensionalen-Druckeinrichtung 10 oder der Anlage, vor allem deren Diagnosemöglichkeiten, lässt sich der Erfassungsprozess des Ergebnisses, beziehungsweise auch ein Teilergebnis, auch teilautomatisieren. Beispielsweise können erkannte Fehler in der Hardware direkt mit dem Datensatz integriert werden. Liegt insbesondere die Kamera 34 vor, kann der Druckprozess auch per Bilderkennung überwacht werden. Hier wird der Produktionsfortschritt per Bilderkennung beispielsweise gegen das Dreidimensionale-Modell des bearbeiteten Druckauftrags verglichen.

Dieses Verfahren lässt sich auch in anderen Bereichen anwenden, sofern die Dreidimensionale-Druckeinrichtung 10 ausreichend Speichermöglichkeiten für notwendige Daten aufweisen, diese mit Ergebnislabeln versehen werden können, oder Ergebnislabel nachträglich ergänzt werden können, und ausreichend viele Datensätze an die zentral elektronische Recheneinrichtung 20 übermittelt werden können, um das Training des maschinellen Lernmodells 30 zu ermöglichen.

## Patentansprüche

1. Verfahren zum Erzeugen von Trainingsdaten (28) für ein maschinelles Lernmodell (30) zum Betreiben einer Dreidimensionalen-Druckeinrichtung (10) mittels einer elektronischen Recheneinrichtung (18), mit den Schritten:
- Erfassen eines Produktionsdatensatzes (22) während einer Produktion eines Produkts (44) mittels der Dreidimensionalen-Druckeinrichtung (10) mittels der elektronischen Recheneinrichtung (18);
- Erzeugen einer Qualitätsanfrage (24) zum Produkt (44) mittels der elektronischen Recheneinrichtung (18);
- Erfassen einer Qualitätsantwort (26) zum Produkt (44) mittels der elektronischen Recheneinrichtung (18);
- Labeln des Produktionsdatensatzes (22) auf Basis der Qualitätsantwort (26) mittels der elektronischen Recheneinrichtung (18); und
- Erzeugen der Trainingsdaten (28) in Abhängigkeit von dem gelabelten Produktionsdatensatz (22) mittels der elektronischen Recheneinrichtung (18).

2. Verfahren nach Anspruch 1, **dadurch gekennzeichnet, dass**
die Trainingsdaten (28) an eine zentrale elektronische Recheneinrichtung (20) zum Trainieren des maschinellen Lernmodells (30) übertragen werden.

3. Verfahren nach Anspruch 1 oder 2, **dadurch gekennzeichnet, dass**
als Produktionsdaten zumindest Schwingungen während der Produktion an der Dreidimensionalen-Druckeinrichtung (10) erfasst werden.

4. Verfahren nach einem der vorhergehenden Ansprüche, **dadurch gekennzeichnet, dass**
als Produktionsdaten mechanische Schwingungen eines Druckkopfes (16) der Dreidimensionalen-Druckeinrichtung (10) erfasst werden.

5. Verfahren nach einem der vorhergehenden Ansprüche, **dadurch gekennzeichnet, dass** zusätzlich zum Erzeugen der Trainingsdaten (28) eine Zustandsinformation der Dreidimensionalen-Druckeinrichtung (10) erfasst wird.

6. Verfahren nach einem der vorhergehenden Ansprüche, **dadurch gekennzeichnet, dass** die Qualitätsantwort (26) durch Eingabe von einem Nutzer der Dreidimensionalen-Druckeinrichtung (10) erfasst wird.

7. Verfahren nach einem der vorhergehenden Ansprüche, **dadurch gekennzeichnet, dass** die Qualitätsantwort (26) mittels einer Erfassungseinrichtung der Dreidimensionalen-Druckeinrichtung (10) erfasst wird.

8. Verfahren zum Trainieren eines maschinellen Lernmodells (30) mittels Trainingsdaten (28), welche mittels eines Verfahrens nach einem der Ansprüche 1 bis 7 erzeugt wurden.

9. Verfahren nach Anspruch 8, **dadurch gekennzeichnet, dass** das maschinelle Lernmodell (30) in einer zentralen elektronischen Recheneinrichtung (20) bereitgestellt wird.

10. Verfahren nach einem der Ansprüche 8 oder 9, **dadurch gekennzeichnet, dass** das angelernte maschinelle Lernmodell (32) an die elektronische Recheneinrichtung (18) zurück übermittelt wird.

11. Verfahren zum Betreiben einer Dreidimensionalen-Druckeinrichtung (10) mittels eines angelernten maschinellen Lernmodells (32) nach einem der Ansprüche 8 bis 10.

12. Verfahren nach Anspruch 11, **dadurch gekennzeichnet, dass** aktuelle Produktionsdaten der Dreidimensionalen-Druckeinrichtung (10) erfasst werden und mittels des angelernten maschinellen Lernmodells (32) analysiert werden, wobei eine Produktion eines Produkts (44) auf Basis der Analyse bewertet wird.

13. Computerprogrammprodukt zum Erzeugen von Trainingsdaten (28) nach einem der Ansprüche 1 bis 7 und/oder zum Trainieren eines maschinellen Lernmodells (30) nach einem der Ansprüche 8 bis 10 und/oder zum Betreiben einer Dreidimensionalen-Druckeinrichtung (10) nach einem der Ansprüche 11 bis 12.

14. Computerlesbares Speichermedium mit einem Computerprogrammprodukt nach Anspruch 13.

15. Elektronische Recheneinrichtung (18, 20) zum Betreiben einer Dreidimensionalen-Druckeinrichtung (10), wobei die elektronische Recheneinrichtung (18, 20) zum Durchführen von zumindest einem der Verfahren zum Erzeugen von Trainingsdaten (28) nach einem der Ansprüche 1 bis 7 und/oder zum Trainieren eines maschinellen Lernmodells (30) nach einem der Ansprüche 8 bis 10 und/oder zum Betreiben einer Dreidimensionalen-Druckeinrichtung (10) nach einem der Ansprüche 11 bis 12 ausgebildet ist.
